Europäisches Patentamt

European Patent Office

Office européen des brevets

(19)

(11) Veröffentlichungsnummer: **0 148 338**
**B1**

(12) **EUROPÄISCHE PATENTSCHRIFT**

(45) Veröffentlichungstag der Patentschrift: **14.03.90**

(21) Anmeldenummer: **84112441.5**

(22) Anmeldetag: **16.10.84**

(51) Int. Cl.⁵: **B 60 B 21/10,** B 60 C 17/00,
B 60 C 15/02

(54) **Fahrzeugrad.**

(30) Priorität: **15.12.83 DE 3345367**

(43) Veröffentlichungstag der Anmeldung:
**17.07.85 Patentblatt 85/29**

(45) Bekanntmachung des Hinweises auf die
Patenterteilung:
**14.03.90 Patentblatt 90/11**

(84) Benannte Vertragsstaaten:
**AT BE CH DE FR GB IT LI LU NL SE**

(56) Entgegenhaltungen:
**BE-A- 494 282**
**DE-A-3 019 742**
**DE-A-3 246 086**
**FR-A-1 407 770**
**FR-A-2 040 045**
**US-A-1 885 484**
**US-A-3 288 193**

(73) Patentinhaber: **Continental Aktiengesellschaft**
**Königsworther Platz 1**
**D-3000 Hannover 1 (DE)**

(72) Erfinder: **Entmayr, Peter, Dr. Dipl.-Chem.**
**Birkenweg 2**
**D-3167 Burgdorf (DE)**
Erfinder: **Rohde, Dieter, Dipl.-Ing.**
**Windmühlenstrasse 4**
**D-3160 Lehrte (DE)**
Erfinder: **Thielemann, Klaus, Dipl.-Ing.**
**Gaussstrasse 2**
**D-3200 Hildesheim (DE)**

Courier Press, Leamington Spa, England.

**Beschreibung**

Die Erfindung betrifft ein luftbereiftes Fahrzeugrad gemäß dem Oberbegriff von Patentanspruch 1.

Ein solches Fahrzeugrad ist z.B. aus der DE—A—30 19 742 bekannt. Es hat sich insoweit bewährt, als es bei einem Druckverlust infolge einer Panne noch über beträchtliche Strecken gefahren werden kann, ohne daß der Reifen dauerhaften Schaden nimmt.

Weiterhin wird in der FR—A—1 407 770 ein Fahrzeugrad mit einem Reifen großer Einfederung beschrieben, das im Reifeninnenraum einen Zahntrieb aufweist, der von Zähnen im Zenitbereich des Reifens und einem Zahnring auf der Felge gebildet wird. Da es sich um eine konventionelle Konstruktion mit radial nach außen weisenden Felgenhörnern handelt, sind der Zahnring und der Reifen nur auf eine mehrteilige Felge montierbar. Die wegen der gewünschten Einfederung extrem langen Seitenwände bergen die Gefahr in sich, daß bei Seitenkrafteinwirkungen z.B. infolge von Kurvenfahrten die Zähne des Reifens und des Zahnrings nicht mehr ineinandergreifen. In der Eingreifstellung der Zähne gehen die unteren Seitenwände von der Steilstellung in eine Flachstellung über, so daß sie in diesem Fahrzustand stark beansprucht werden und damit der Gefahr einer Schädigung unterliegen.

Beim Einsatz an schweren Fahrzeugen, z.B. Lastkraftwagen oder gepanzerten Militärfahrzeugen kann es vorkommen, daß bei einem Luftdruckverlust die Reibung zwischen Reifen und Felge so gering ist, daß die Felge sich im Reifen dreht, so daß eine Antriebskraft nicht auf den Reifen und damit nicht auf den Fahruntergrund übertragen werden kann.

Der Erfindung liegt deshalb die Aufgabe zugrunde, ein Fahrzeugrad der eingangs genannten Art anzugeben, bei dem die genannten Schwierigkeiten nicht mehr auftreten und bei dem der Reifen auch auf eine einteilige Felge montiert werden kann.

Diese Aufgabe wird erfindungsgemäß durch die im Kennzeichen von Patentanspruch 1 angegebenen Merkmale gelöst.

Unter Notlauf soll im Rahmen dieser Erfindung ein Fahrzustand verstanden werden, bei dem der Fahrzeugluftreifen drucklos ist, wobei die Luft im Reifen aufgrund einer Panne entwichen oder gezielt abgelassen worden sein kann. Als besonders vorteilhaft wird eine Ausführungsform angesehen, bei der die Erhebungen und Vertiefungen an Reifen und Felge einen Zahntrieb bilden, so daß der Reifen wie ein Zahnriemen und die Felge wie ein Zahnkranz wirkt. Hierdurch wird die Übertragung sehr hoher Kräfte möglich. Damit diese Kräfte aber auch zuverlässig auf die Fahrbahn bzw. In unwegsamen Gelände auf den Fahruntergrund gebracht werden können, wird gemäß einer weiteren Ausgestaltung der Erfindung vorgeschlagen, seitlich neben dem eigentlichen Laufstreifen grobe Profilstollen anzuordnen. Diese Profilstollen sollten einen großen Abstand voneinander einhalten und eine Höhe aufweisen, mit der sie erst bei einem Notlauf voll wirksam werden, indem sie sich zahnartig im Untergrund einkrallen können. Ein solches Fahrzeugrad läßt sich unter anderem in der Weise einsetzen, daß es auf befestigten Straßen im aufgepumpten Zustand mit hohen Geschwindigkeiten gefahren werden kann und daß beim Wechsel in unwegsames Gelände zur Übertragung hoher Antriebskräfte die Luft aus dem Reifen abgelassen wird.

Wegen des Formschlusses zwischen Reifeninnenwand und Felgenaußenteil ist es beim Notlauf erforderlich, daß die Reifenwülste und die zugehörigen Felgensitzflächen weitgehend entkoppelt sind, so daß eine Relatibewegung möglich ist, ohne daß die Reifenwülste zerstört werden. Dies wird durch Aufbringen einer Gleitmittelschicht auf die Reifenwülste oder die Felgensitsflächen oder aber dadurch möglich, daß die Reifenwülste unter Vorspannung in Form von Drehmomenten montiert werden, die beim Notlauf ein Wegschwenken der Wülste von den Felgensitzflächen bewirken. Weitere vorteilhafte Ausgestaltungen der Erfindung sind den Unteransprüchen zu entnehmen.

Nachfolgend werden mehrere Ausführungsbsiespiele der Erfindung anhand von Zeichnungen beschrieben.

Es zeigt

Fig. 1 ein Fahrzeugrad im aufgepumpten Zustand in einem radialen Teilschnitt,

Fig. 2 das Fahrzeugrad gemäß Fig. 1 in einer Notlaufposition in einem radialen Teilschnitt,

Fig. 3 einen Schnitt durch das Fahrzeugrad gemäß Fig. 2 in der Ebene III—III,

Fig. 4 ein Fahrzeugrad mit zwei seitlichen Zahntrieben in einem radialen Teilschnitt,

Fig. 5 ein Fahrzeugrad mit einem mittleren Zahntrieb in einem radialen Teilschnitt.

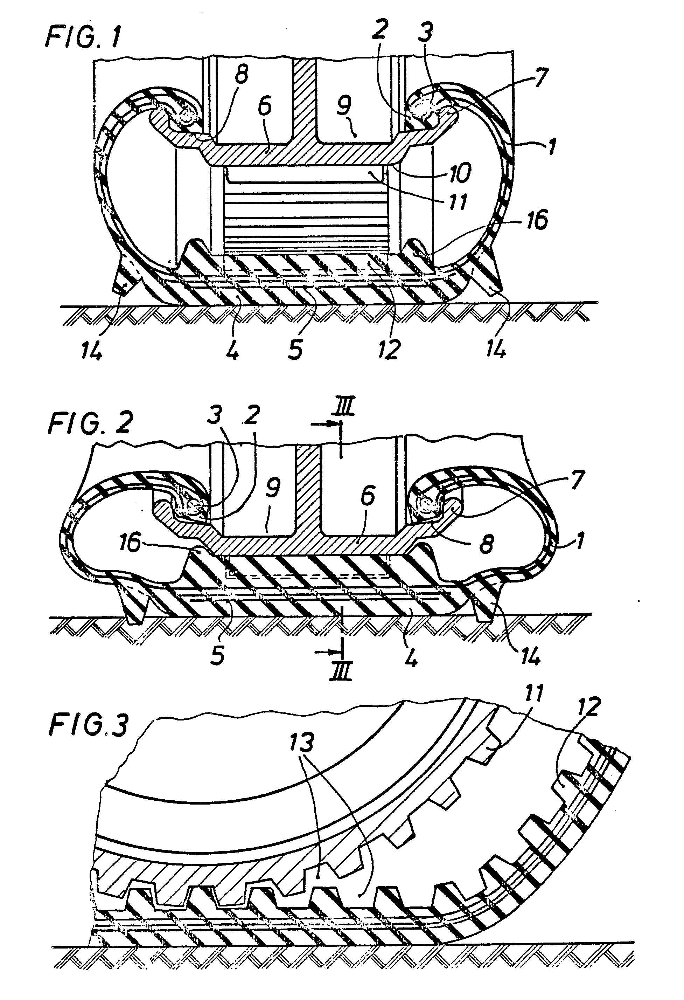

Bei dem in Fig. 1 dargestellten Fahrzeugrad besteht der Reifen im wesentlichen aus Gummi oder gummiähnlichen Kunststoffen und weist eine Radialkarkasse 1 auf, die in den Reifenwülsten 2 durch Umschlingen von zug- und druckfesten Wulstkernen 3 verankert ist. Die Festigkeitsträger der Karkasse 1 können ein- oder mehrlagig angeordnet sein und aus textilen Fäden oder metallischen Drähten bzw. Kabeln bestehen. Zwischen Laufstreifen 4 und Karkasse 1 befindet sich ein üblicher Gürtel 5.

Die Felge 6 weist seitlich außen im wesentlichen radial nach innen sich erstreckende Felgenhörner 7 und daneben auf der radial inneren Seite des Felgenkranzes Sitzflächen 8 für den Reifen auf. Axial nach innen hin schließen sich Hochbetten 9 an, die eine Montage des Reifens auf die bevorzugt einteilige Felge 6 ermöglichen. Im Bereich der Felgenhörner 7 erstrecken sich die Reifenwände nahezu waagerecht nach seitlich außen.

Auf der radial äußeren Seite ist der Felgenkranz im Bereich gegenüber von den Hochbetten 9 mit einer Felgenstützfläche 10 mit stegartigen, quer verlaufenden Zähnen 11 eines Zahntriebs versehen, die ebenfalls als Stützflächen für den Reifen bei einem Notlauf dienen können. Die Querschnittsform der Zähne 11 kann wie bei üblichen Zahnriemenantrieben ausgebildet sein, z.B. trapezförmig oder gerundet.

Auf der Innenseite der Reifenwand befinden sich im Bereich unterhalb vom Laufstreifen 4 entsprechende stegartige, querverlaufende Zähne 12, die bei einem Notlauf in die Lücken 13 zwischen den Zähnen 11 der Felge 6 eingreifen (Fig. 3). Somit bilden Reifen und Felge 6 im Bereich der Reifenaufstandsfläche bei einem Notlauf gleichsam einen Zahnriemenantrieb, mit dem äußerst große Antriebskräfte von der Felge 6 auf den Reifen übertragen werden können. Damit diese Kräfte vor allem in unwegsamen Gelände auch vom Reifen auf einen weichen und schlammigen Untergrund übertragen werden können, besitzt der Reifen außen im Bereich der Reifenschulter zusätzliche Profilstollen 14, die nur in der Notlaufposition voll wirksam werden und die in Umfangsrichtung so große Abstände aufweisen können, daß sie mit dem Untergrund gleichsam einen weiteren Zahntrieb bilden. Bei Bedarf können auf jeder Seite selbstverständlich auch mehrere Reihen mit Zusatzstollen 14 vorhanden sein, wobei auch ein teilweises Ineinandergreifen der Reihen möglich ist.

Da bei einem Notlauf (Fig. 2) der Reifen im Bereich des Laufstreifens 4 formschlüssig in die Felge 6 eingreift, so daß kein Schlupf möglich ist, muß sich zum Ausgleich der Umfangslängendifferenz Laufstreifen 4 und Felge 6 der Reifen im Wulstbereich relativ zur Felge 6 bewegen können, d.h. es muß eine Entkopplung stattfinden. Dies kann z.B. dadurch erreicht werden, daß die Reifenwülste 2 mit Vorspannung montiert werden, so daß sie bei Druckverlust von allein aus der montierten Stellung herausschwenken. Zur Reibungsverminderung beim Notlauf können weiterhin Gleitmittelschichten 15 am Reifen oder an der Felge 6 im Wulstbereich des Reifens vorhanden sein (Fig. 5). Damit der Reifen bei einem Notlauf gegen seitliche Verschiebungen gesichert wird, weist er neben dem gezahnten Bereich zwei umlaufende Führungsstege 16 auf, die die Felgenstützfläche zwischen sich einschließen (Fig. 2), und gegebenenfalls mit einer Gleitmittelschicht bedeckt sein können.

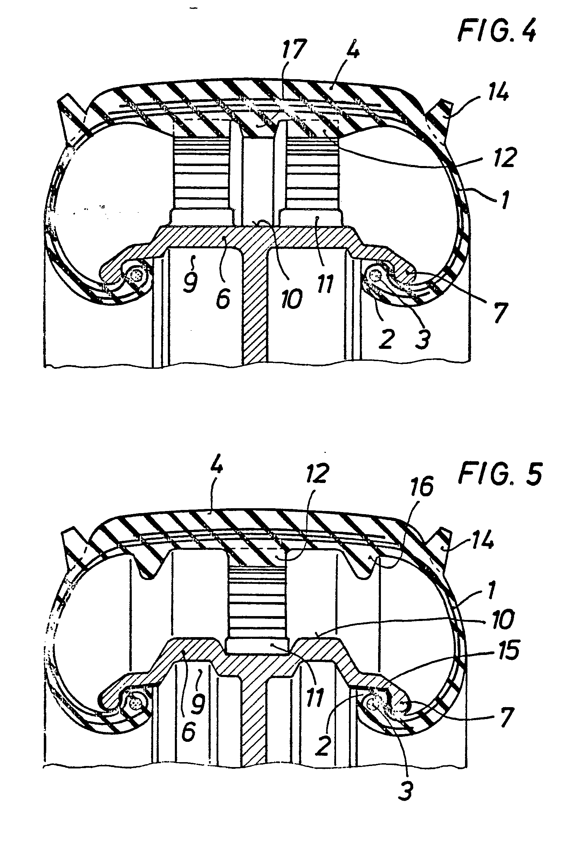

Beim Rad nach Fig. 4 erstreckt sich der Zahntrieb von Felge 6 und Reifen nicht über die volle Breite der Felgenstützfläche 10, sondern er nimmt nur etwa die beiden äußeren Drittel dieses Bereichs ein. Zwischen den stegartigen Zähnen 12 des Reifens befindet sich ein umlaufender Steg 17, der sich beim Notlauf auf dem mittleren Bereich der Felgenstützfläche 10 abstützen kann und dann gleichzeitig eine Seitenführungsfunktion für den Reifen übernimmt. Die übrigen Teile von Reifen und Felge 6 sind wie beim vorstehend beschriebenen Fahrzeugrad aufgebaut.

Das Rad nach Fig. 5 unterscheidet sich von dem gemäß Fig. 4 vor allem dadurch, daß die Zähne 11, 12 des Zahntriebs von Felge 6 und Reifen sich etwa im mittleren Drittel des Bereichs der Felgenstützfläche 10 befinden, während sich in den benachbarten Dritteln bei einem Notlauf der Reifen glatt auf die Felgenstützfläche 10 aufliegt. Zur

Führung des Reifens dienen wie beim Rad nach Fig. 1 zwei Stege 16.

Bei den beschriebenen Fahrzeugrädern sind normalerweise die Zähne an den Felgen aus Metall und die am Reifen aus einem harten Gummi, doch können bei Bedarf zur Gewichtsreduzierung alle Zähne auch aus einem leichten Kunststoff gefertigt sein.

Es sollte angemerkt werden, daß zur Montage des Reifens auf einteilige Felgen 6 vorab die Felge 6 nahezu rechtwinklig zum Reifen in diesen hineingeschoben und dann im Innenraum des Reifens gedreht wird, so daß sich die beiden Reifenwülste 2 außen neben den zugehörigen Felgenhörnern 7 befinden. Die weitere Montage erfolgt auf übliche Weise.

**Patentansprüche**

1. Luftbereiftes Fahrzeugrad mit einem Fahrzeugluftreifen, der im wesentlichen aus Gummi oder gummiähnlichen Kunststoffen besteht und einen Gürtel (5) sowie eine Radialkarkasse (1) aufweist, die in den Wülsten (2) durch Umschlingen von zug- und druckfesten Wulstkernen (3) verankert ist, und mit einer starren Felge (6), die am radial inneren Umfang des Felgenkranzes Sitzflächen (8) für den Reifen aufweist, von denen aus sich die Reifenwände zunächst im wesentlichen waagerecht nach außen ertrecken, und die am radial äußeren Umfang mit Stützflächen (10) zur Abstützung des Reifens bei einem Notlauf versehen ist, dadurch gekennzeichnet, daß die Reifeninnenwand im Bereich des Laufstreifens (4) und die radial äußeren Teile der Felge (6) überwiegend in Querrrichtung verlaufende Erhebungen (11, 12) und Vertiefungen (13) aufweisen, die bei einem Notlauf des Reifens ineinandergreifen, und daß an der Reifeninnenwand und/oder an der Felge (6) Stege (16, 17) vorhanden sind, die eine Seitenführung des Reifens beim Notlauf bewirken.

2. Fahrzeugrad nach Anspruch 1, dadurch gekennzeichnet, daß die Erhebungen und Vertiefungen als Zähne (11, 12) und Lücken (13) bei einem Notlauf einen Zahntrieb bilden.

3. Fahrzeugrad nach Anspruch 1 oder 2, dadurch gekennzeichnet, daß sich die Erhebungen und Vertiefungen, insbesondere der Zahntrieb, im mittleren Drittel der Felge (6) und des gegenüberliegenden Reifeninnenwandbereichs befinden, während in den benachbarten Dritteln bei einem Notlauf die Reifeninnenwand glatt auf der Folgenstützfläche (10) aufliegt.

4. Fahrzeugrad nach Anspruch 1 oder 2, dadurch gekennzeichnet, daß sich die Erhebungen und Vertiefungen, insbesondere der Zahntrieb, in den beiden äußeren Dritteln der Felge (6) und des gegenüberliegenden Reifeninnenwandbereichs befinden.

5. Fahrzeugrad nach Anspruch 1, dadurch gekennzeichnet, daß seitlich vom Laufstreifen (4) zusätzliche Stollen (14) angeordnet sind, die beim Notlauf mit dem Fahruntergrund in Eingriff stehen.

## Revendications

1. Roue de véhicule équipée d'un pneumatique constitué essentiellement par du caoutchouc ou des matières plastiques semblables au caoutchouc et comportant une ceinture et une carcasse radiale, qui est ancrée dans les talons par enroulement autour de tringles résistantes à la traction et à la compression, et une jante rigide, qui possède, sur le pourtour, intérieur du point de vue radial, de son rebord, des surfaces d'appui pour le pneumatique, à partir desquelles les parois du pneumatique s'étendent tout d'abord sensiblement horizontalement vers l'extérieur, et est équipée, sur son pourtour extérieur du point de vue radial, de surfaces d'appui servant à supporter le pneumatique dans le cas d'un fonctionnement exceptionnel en cas d'urgence, caractérisé en ce que la paroi intérieure du pneumatique comporte, au voisinage de la bande de roulement (4), des bossages (11, 12), et les parties, extérieures du point de vue radial, de la jante (6) comportent des renforcements (13), les bossages et renforcements s'étendant principalement dans la direction transversale et s'engageant les uns dans les autres dans le cas d'un fonctionnement exceptionnel en cas d'urgence du pneumatique, et que sur la paroi intérieure du pneumatique et/ou sur la jante (6) se trouvent prévues des nervures (16, 17), qui réalisent un guidage latéral du pneumatique dans le cas d'un fonctionnement exceptionnel en cas d'urgence.

2. Roue de véhicule selon la revendication 1, caractérisée en ce que les bossages et les renforcements, qui sont réalisés sous la forme de dents (11, 12) et d'entredents (13), forment, dans le cas d'un fonctionnement exceptionnel en cas d'urgence, un système d'entraînement à dentures imbriquées.

3. Roue de véhicule selon la revendication 1 ou 2, caractérisée en ce que les bossages et les renforcements, notamment le dispositif d'entraînement à dentures imbriquées, sont situés dans le tiers médian de la jante (6) et de la zone opposée de la paroi intérieure du pneumatique tandis que, dans le cas d'un fonctionnement exceptionnel en cas d'urgence, la paroi intérieure du pneumatique s'applique à plat sur la surface d'appui (10) de la jante, dans les tiers voisins.

4. Roue de véhicule selon la revendication 1 ou 2, caractérisée en ce que les bossages et les renforcements, notamment le dispositif d'entraînement à dentures imbriquées, sont situés dans les deux tiers extérieurs de la jante (6) et de la zone opposée de la paroi intérieure du pneumatique.

5. Roue de véhicule selon la revendication 1, caractérisée en ce que des cannelures supplémentaires (14), qui, dans le cas d'un fonctionnement exceptionnel en cas d'urgence, pénètrent dans la chaussée, sont disposées latéralement par rapport à la bande de roulement (4).

## Claims

1. Vehicle wheel fitted with a pneumatic tyre, having a pneumatic vehicle tyre which is substantially formed from rubber or rubber-like plastics materials, a belt, a radial carcase which is secured in the beads by being looped around substantially inextensible and pressure-resistant bead cores, and a rigid rim which has seating surfaces for the tyre on the radially inner circumference of the rim ring, the tyre walls initially extending substantially horizontally outwardly from said seating surfaces, and the rim is provided on its radially outer circumference with supporting surfaces for supporting the tyre during emergency running, characterised in that the inner wall of the tyre in the region of the tread strip (4) and the radially outer portions of the rim (6) have raised portions (11, 12) and recessed portions (13), which portions (11, 12, 13) extend predominantly in a transverse direction and engage in one another during emergency running of the tyre, and in that webs (16, 17) are situated on the inner wall of the tyre and/or on the rim (6) and cause the tyre to be guided laterally during emergency running.

2. Vehicle wheel according to claim 1, characterised in that the raised portions and recessed portions, in the form of teeth (11, 12) and gaps (13), form a toothed drive during emergency running.

3. Vehicle wheel according to claim 1 or 2, characterised in that the raised portions and recessed portions, more especially the toothed drive, are situated in the middle third of the rim (6) and of the oppositely situated inner wall region of the tyre, whereas the inner wall of the tyre is supported on the rim supporting surface (10) so as to be flush therewith in the adjacent thirds during emergency running.

4. Vehicle wheel according to claim 1 or 2, characterised in that the raised portions and recessed portions, more especially the toothed drive, are situated in the two outer thirds of the rim (6) and of the oppositely situated inner wall region of the tyre.

5. Vehicle wheel according to claim 1, characterised in that additional supports (4) are disposed laterally of the tread strip (4) and are in contact with the ground travelled during emergency running.

FIG.1

FIG.2

FIG.3

1

FIG. 4

FIG. 5